# EUROPÄISCHE PATENTANMELDUNG

(11) **EP 1 217 678 A2**
(43) Veröffentlichungstag der Anmeldung: **26.06.2002**
(21) Anmeldenummer: 01128350.4
(22) Anmeldetag: 30.11.2001
(51) Int. Cl.: H01M 8/04, H01M 8/06

(54) **Brennstoffzellensystem mit Zwischenspeicher und Steuerungsverfahren**

(30) Priorität: 22.12.2000 DE 10064251
(71) Anmelder: Volkswagen Aktiengesellschaft, 38436 Wolfsburg (DE)
(72) Erfinder: Mayer, Jörg, Dr. rer. nat., 38440 Wolfsburg (DE); Kuipers, Jan-Kasper, 38442 Ehmen (DE); Dübel, Olaf, Dr., 38550 Isenbüttel (DE); Hinsenkamp, Gert, Dr., 38533 Vordorf (DE); Maume, Christoph, 38106 Braunschweig (DE); Peter, Stefan, Dr., 64823 Gross-Umstadt (DE)

(57) **Zusammenfassung**

Ein Brennstoffzellensystem (1), das mindestens eine Reformereinheit (2), zur Erzeugung von wasserstoffhaltigem Reformatgas, und mindestens eine Brennstoffzelle (4) mit mindestens einem Eingang (41) für das wasserstoffhaltige Reformatgas umfasst, wobei zwischen der Ausgangsseite der Reformereinheit (2) und der wasserstoffseitigen Eingangsseite (41) der Brennstoffzelle (4) mindestens ein Zwischenspeicher (3) für das wasserstoffhaltige Reformatgas zwischengeschaltet ist. Ein Steuerungsverfahren für ein solches Brennstoffzellensystem (1).

## Beschreibung

Die vorliegende Erfindung betrifft ein Brennstoffzellensystem mit Zwischenspeicher und ein Steuerungsverfahren für solche Brennstoffzellensysteme.

Insbesondere in der Automobilindustrie ist die Verwendung von Wasserstoff zur Erzeugung elektrischer Energie mittels Brennstoffzellen bekannt. Der Wasserstoff, der für diese Verwendung benötigt wird kann aus einem flüssigen Kraftstoff gewonnen werden. Insbesondere finden Kohlenwasserstoffe, wie beispielsweise Benzin oder Methanol, Anwendung. Der Wasserstoff wird aus diesen Kraftstoffen in sogenannten Reformern erhalten. In diesem Reformer wird der Kraftstoff in Kohlendioxid bzw. Kohlenmonoxid und Wasserstoff umgewandelt. Das Produkt des Reformers ist somit ein wasserstoffreiches Gas, welches einer Brennstoffzelle zugeführt werden kann. In bekannten Brennstoffzellensystemen wird das wasserstoffhaltige Reformatgas unmittelbar an die Brennstoffzelle geliefert, wo es verbraucht wird, indem es in Strom umgesetzt wird.

Dieser Strom wird bei Brennstoffzellensystemen, die in der Automobilindustrie zur Anwendung kommen, zum Betreiben des Motors verwendet. Bei unterschiedlichen Geschwindigkeiten des Fahrzeuges, unterschiedlichen Beschleunigungen oder Abbremsvorgängen werden von der Brennstoffzelle unterschiedliche Leistungen gefordert. Bei Beschleunigungsvorgängen tritt beispielsweise eine kurzzeitige erhöhte Leistungsabforderung an der Brennstoffzelle auf, die schlagartig auftritt. Um diesen unterschiedlichen Anforderungen gerecht werden zu können und insbesondere den schlagartigen erhöhte Anforderungen, d.h. einen erhöhten Gasbedarf der Brennstoffzelle, erfüllen zu können, ist es bisher notwendig gewesen die Dimensionierung des Reformers der maximalen Belastung anzupassen, um die beispielsweise beim Beschleunigen schlagartig benötigten großen Mengen von Brennstoffgas unmittelbar bereit stellen zu können. Dies führt aber dazu, dass es notwendig ist den Reformer entsprechend der Spitzenleistungsanforderung der Brennstoffzelle, wie diese beispielsweise bei Beschleunigungsvorgängen auftritt, auszulegen. Dadurch wird eine Überdimensionierung des Reformers notwendig, die sowohl zu einem höheren Gewicht des Brennstoffzellensystems als auch zu zusätzlich erforderlichem Bauraum im Fahrzeug führt. Dadurch steigen die Herstellungskosten des Brennstoffzellensystems erheblich.

Weiterhin hat diese Auslegung des Systems zur Folge, dass in dem Reformer stets mehr Reformatgas erzeugt werden muss, als die Brennstoffzelle im momentanen Betriebszustand gerade verbraucht, um eine Gangreserve für eine Beschleunigung des Fahrzeuges zu haben. Dieses überschüssige, von der Brennstoffzelle nicht verwertbare, Reformatgas wird verbrannt und ungenutzt an die Umwelt abgegeben. Das permanente Vorhalten von Brennstoff führt somit zu einer Abnahme des Wirkungsgrades und einem erhöhten Verbrauch an Kraftstoff pro zurückgelegter Entfernung.

Es sind bereits Vorrichtungen bekannt bei denen der kurzfristig erhöhte Gasbedarf aufgrund erhöhter Leistungsabfrage durch Bereitstellen von Gasen, die aus einer Elektrolyse-Reaktion erhalten wurden, abgedeckt wird. Ein solches System ist in DE 33 45 956 beschrieben. In diesem System wird während Spitzenenergieanforderungen reiner Sauerstoff und reiner Wasserstoff, die aus der Elektrolyse gewonnen wurden, als Reaktionsgase in der Brennstoffzelle verwendet und ersetzen zu diesem Zeitpunkt das im Normalbetrieb benutzte Reformatgas.

Bei diesen Vorrichtungen ist es allerdings nachteilig, dass eine gesonderte Elektrolyseeinheit zur Verfügung gestellt werden muss und des weiteren separate Speicherbehälter für den Sauerstoff und den Wasserstoff aus der Elektrolyse notwendig sind.

Aufgabe der Erfindung ist es daher ein Brennstoffzellensystem und ein Steuerungsverfahren für das dynamische Betreiben eines Brennstoffzellensystems zur Verfügung zu stellen, die es erlauben den unterschiedlichen Leistungsabforderungen an der Brennstoffzelle gezielt gerecht zu werden, ohne durch dauerhafte Überproduktion Reformatgas vorhalten zu müssen, und die es weiterhin erlauben den apparativen Aufbau so gering wie möglich zu halten.

Diese Aufgabe wird erfindungsgemäß durch ein Brennstoffzellensystem, wie in Anspruch 1 definiert gelöst. Demnach umfasst das Brennstoffzellensystem mindestens eine Reformereinheit, zur Erzeugung von wasserstoffhaltigem Reformatgas, und mindestens eine Brennstoffzelle mit mindestens einem Eingang für das wasserstoffhaltige Reformatgas, wobei zwischen der Ausgangsseite des Reformers und der wasserstoffseitigen Eingangsseite der Brennstoffzelle mindestens ein Zwischenspeicher für das wasserstoffhaltige Reformatgas zwischengeschaltet ist.

In dem Zwischenspeicher kann von dem Reformer erzeugtes, wasserstoffhaltiges Gas aufgenommen, weitergeleitet oder gespeichert werden. Der Zwischenspeicher kann somit als Puffer dienen, der stark unterschiedlichen Leistungsabforderungen an der Brennstoffzelle Rechnung tragen kann. Durch diesen Zwischenspeicher kann das Brennstoffzellensystem dynamisch betrieben werden, d.h. es kann auf Schwankungen der Leistungsabforderung ideal reagieren.

Vorzugsweise stellt die Zwischenschaltung des Zwischenspeichers eine Reihenschaltung dar. Durch diese Schaltung wird sämtliches von der Reformereinheit erzeugte Reformatgas zunächst an den Zwischenspeicher geleitet und entsprechend der Leistungsabfrage an der nachgeschalteten Brennstoffzelle an diese weitergeleitet. Dadurch wird die Reformereinheit von der Brennstoffzelle direkt entkoppelt. Hierdurch wird für eine, an der Brennstoffzelle abgefragte, Leistung eine ausreichende Reformatgaszufuhr unabhängig von dem momentanen Betriebszustand des Reformers ermöglicht.

Vorzugsweise schließt der Zwischenspeicher sich unmittelbar an die Reformereinheit an und es erfolgt keine weitere Bearbeitung des Reformatgases vor Eintritt in den Zwischenspeicher. Durch ein solche unmittelbare Verbindung des Zwischenspeichers und dem Reformer kann das, durch die Druckverhältnisse in dem Reformer und in der Brennstoffzelle selber gegebene, Druckgefälle vorteilhaft genutzt werden. Eine Druckerhöhung des aus dem Reformer austretenden Reformatgases zur Speicherung ist nicht notwendig, da der in dem Reformer herrschende Druck idealerweise ein höheres Druckniveau aufweist, als die Brennstoffzelle, die bei niedrigerem Druck arbeitet.

Das Brennstoffzellensystem weist vorteilhafterweise, mindestens ein Kontrollelement zur Überwachung des Befüllungszustandes des Zwischenspeichers auf. Hierdurch kann bestimmt werden, ob und wieviel des, von dem Reformer an den Zwischenspeicher geleiteten und dort gegebenenfalls zwischenzeitlich aufgefangenen, Gases bereits an die Brennstoffzelle weitergeleitet worden ist.

Weiterhin können mindestens ein Kontrollelement zur Überwachung des Betriebszustandes des Reformers und mindestens ein Kontrollelement zur Überwachung der an der Brennstoffzelle abgeforderten Leistung in dem Brennstoffzellensystems vorgesehen sein. Hierdurch können die Betriebszustände des Reformers, wie beispielsweise Leerlauf-, Teillast- oder Volllastzustand sowie die Leistungsabforderungen an der Brennstoffzelle, wie beispielsweise hoch, niedrig oder normal, erfasst werden.

Die durch die Kontrollelemente erfassten Daten werden vorzugsweise von mindestens einem Steuerelement für die Befüllung des Zwischenspeichers, für den Betriebszustand des Reformers und/oder die Reformatgaszufuhr zu der Brennstoffzelle ausgewertet und verarbeitet. Dadurch kann insbesondere die Leistungsabforderung an der Brennstoffzelle und der Befüllungszustand des Zwischenspeichers überwacht werden und der Betriebszustand des Reformers abhängig von den Überwachungsergebnissen gesteuert werden.

Der Zwischenspeicher ist vorzugsweise so ausgelegt ist, dass die aufnehmbare Reformatgasmenge im Verhältnis zu dem Gasbedarf steht, der von der Brennstoffzelle zur Erbringung der maximalen Leistung erforderlich ist. Besonders bevorzugt ist die Größe und Regelung des Zwischenspeichers so ausgelegt, dass dieser genug Gas aufnehmen und speichern kann, um ein Erbringen einer Spitzenleistung, wie diese bei Beschleunigungsvorgängen notwendig ist, an der Brennstoffzelle zweimal zu ermöglichen.

Das erfindungsgemäße Brennstoffzellensystem kann besonders vorteilhaft für das Betreiben von Kraftfahrzeugen verwendet werden. Dort kommt es zu häufig auftretenden Anforderungsschwankungen, bei denen schlagartig Spitzengasmengen an die Brennstoffzelle geliefert werden müssen. Solche Anforderungen treten beispielsweise bei der Beschleunigung von Fahrzeugen auf. Gleichzeitig kann eine Verzögerung des Fahrzeuges, bei dem der Reformer noch eine höhere Menge Gas erzeugt, als an der Brennstoffzelle zu diesem Zeitpunkt zum Erfüllen der Leistungsabforderung an der Brennstoffzelle bereits benötigt wird, dazu dienen den Zwischenspeicher aufzufüllen.

Die der Erfindung zugrundeliegende Aufgabe wird weiterhin durch ein Verfahren zum dynamischen Betreiben eines Brennstoffzellensystems gelöst, bei dem die Zufuhr eines in einem Reformer erzeugten wasserstoffhaltigen Reformatgases zu einer Brennstoffzelle über einen Zwischenspeicher erfolgt. Bei diesem Verfahren erfolgt die Zufuhr ausschließlich durch den Zwischenspeicher, der die dynamischen starken Schwankungsspitzen am Brennstoffzellensystem hinsichtlich der geforderten Leistungsabfrage an der Brennstoffzelle zumindest derartig glättet, dass der Reformer energieökonomisch und betriebsökonomisch betrieben werden kann.

Hierzu wird in dem Steuerungsverfahren vorzugsweise die Leistungsabforderung an der Brennstoffzelle und der Befüllungszustand des Zwischenspeichers überwacht und der Betriebszustand des Reformers abhängig von den Überwachungsergebnissen gesteuert. Durch den Zwischenspeicher ist es zum einen möglich die für hohe Leistungsabforderungen an der Brennstoffzelle notwendige Gasmengenspitze kurzfristig zur Verfügung stellen zu können. Andererseits kann durch dieses Steuerungsverfahren ideal auf plötzliche sehr geringe Leistungsabforderungen an der Brennstoffzelle reagiert werden, indem der Reformer langsam auf die neue niedrige Anforderung heruntergefahren werden kann und das in der Übergangsphase entstehende überschüssige Reformatgas in vorteilhafter Weise in dem Zwischenspeicher aufgefangen werden kann.

Die Erfindung wird im folgenden anhand der beiliegenden Zeichnung beschrieben, wobei:

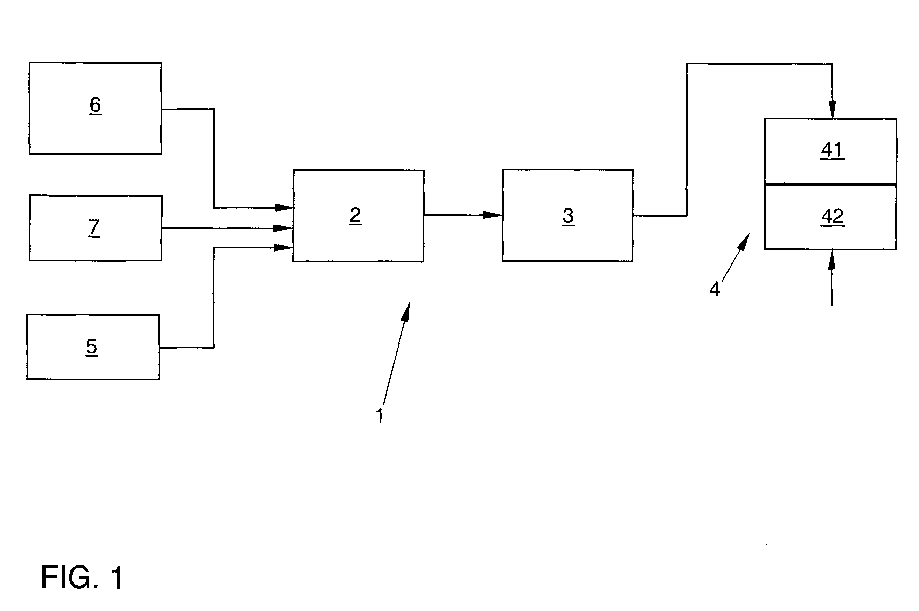

- Figur 1:: eine schematische Darstellung des erfindungsgemäßen Brennstoffzellensystems zeigt.

In Figur 1 ist systematisch ein Brennstoffzellensystem 1 gemäß der Erfindung dargestellt. Dieses umfasst vier Einheiten.

Die erste Einheit umfasst in der dargestellten Ausführungsform einen Wasserbehälter 5 und einen Kraftstoffbehälter 6. Weiterhin umfasst die erste Einheit eine Luftzufuhr 7. Die Luftzufuhr 7 kann durch eine Verbindung mit der Umgebung realisiert sein, wobei dem System Umgebungsluft zugeführt wird. Es liegt aber auch im Rahmen der Erfindung das System mit einem Sauerstoffbehälter zu versehen, von dem Sauerstoff als Reaktionspartner über die Luftzufuhr 7 dem System zugeführt wird. Die erste Einheit dient somit der Zuführung der Reaktionspartner zu der sich daran anschließenden zweiten Einheit, die eine Reformereinheit 2 darstellt. Diese Reformereinheit 2 kann die Stufen der Reformierung, der Entschwefelung, der CO-Konvertierung sowie der selektiven Oxidation umfassen. Je nach Ausgestaltung der Reformereinheit 2 können die Reaktionspartner aus der ersten Einheit unmittelbar der Reformierstufe oder aber zunächst der Entschwefelungsstufe zugeführt werden.

Das in der Reformereinheit 2 erzeugte Reformatgas, das vorzugsweise einer CO-Konvertierung und einer selektiven Oxidation unterzogen wurde, wird dann an einen Zwischenspeicher 3 weitergeleitet. Dieser Zwischenspeicher 3 kann beispielsweise mit einem Einlassventil an der der Reformereinheit 2 zugewandten Seite und mit einem Auslassventil an der Ausgangsseite des Zwischenspeichers 3, zur Regulierung der in dem Zwischenspeicher 3 abzufangenden Gasmenge, ausgestattet sein. Von dem Zwischenspeicher 3 wird das wasserstoffreiche Reformatgas an die Brennstoffzelle 4 weitergeleitet. Der Zwischenspeicher 3 ist so mit der Brennstoffzelle 4 verbunden, dass das in dem Zwischenspeicher 3 gespeicherte Gas an die Anodenseite 41 der Brennstoffzelle 4 geleitet wird. Von der Kathodenseite 42 der Brennstoffzelle 4 wird der Brennstoffzelle 4 Luft zugeführt und so durch Reaktion mit dem wasserstoffreichen Reformatgas elektrischer Strom erzeugt.

Dieser Strom kann von Verbrauchern abgefordert werden. Wird das Brennstoffzellensystem 1 zum Betreiben eines Fahrzeuges verwendet, dient der in der Brennstoffzelle 4 des Systems 1 erzeugte Strom beispielsweise der Beschleunigung des Fahrzeuges.

Der Zwischenspeicher 3 wird von dem Reformer 2 mit Reformatgas befüllt, wenn die Leistungsabforderung an der Brennstoffzelle 4 nicht die gesamte vom Reformer 2 erzeuge Gasmenge erfordert. Wird hingegen von der Brennstoffzelle 4 eine größere Gasmenge gefordert, als diese bei dem momentanen Betriebszustand des Reformers 2 zur Verfügung gestellt werden kann, wird das im Zwischenspeicher 3 befindliche Gas verwendet und der Zwischenspeicher 3 somit entleert.

Durch den als Puffer dienenden Zwischenspeicher wird somit vermieden, dass überschüssiges Reformatgas verworfen wird oder ungenutzt beseitigt werden muss. Mit dem erfindungsgemäßen Brennstoffzellensystem kann vielmehr sämtliches vom Reformer erzeugtes Reformatgas entweder unmittelbar oder nach Zwischenspeicherung der Brennstoffzelle zugeführt werden und somit ohne weitere Bearbeitungsschritte der Erzeugung von Strom, der beispielsweise für die Beschleunigung eines durch das Brennstoffzellensystem getriebenen Fahrzeuges dienen kann, zugeführt.

Die Steuerung des Brennstoffzellensystems kann sich zum einen auf das Befüllen und Entleeren, gegebenenfalls über Aktivieren entsprechender Einlass- und Auslassventile an dem Zwischenspeicher, beschränken. Damit werden die zuvor genannten Vorteile der maximalen Nutzung des Reformatgases erzielt. Weiterhin kann die Steuerung aber auch den Betriebszustand des Reformers beeinflussen. Dieser wird vorzugsweise in Abhängigkeit von dem Befüllungszustand des Zwischenspeichers und der von der Brennstoffzelle abgefragten Leistung eingestellt. Vorteilhaft ist hierbei, wenn der Befüllungszustand während des Betriebes ständig überprüft wird. Kurz bevor der Befüllungszustand beispielsweise einen kritischen niedrigen Stand erreicht sollte der Reformer hochgefahren werden, um, im Vergleich zu der momentan an der Brennstoffzelle benötigten Gasmenge, verhältnismäßig mehr Gas zu erzeugen und dadurch den Zwischenspeicher wieder aufzufüllen.

Der Betrieb des dargestellten Brennstoffzellensystems 1 und die Steuerung des Brennstoffzellensystems 1 wird anhand der folgenden Beispiele beschrieben, bei denen das Brennstoffzellensystem 1 zum Betreiben eines Kraftfahrzeuges verwendet wird.

Zunächst wird die dynamische Wirkungsweise des Systems 1 bei einem Beschleunigungsvorgang des Fahrzeuges beschrieben. Ein Fahrzeug wird beispielsweise von einer Geschwindigkeit von 50 km/h auf eine Geschwindigkeit von 100 km/h beschleunigt und diese Beschleunigung soll beispielsweise innerhalb von 10 Sekunden erfolgen. Weiterhin wird angenommen, dass für diese Beschleunigung die Brennstoffzelle 4 im Vollastbetrieb gefahren werden muss, d.h. die maximal durch die Reaktion von Reformatgas und Luft erzielbare Leistung abgefordert wird. Der Zwischenspeicher 3 muss für diesen Beschleunigungsvorgang so ausgelegt sein, dass durch diesen die Differenz abgedeckt werden kann, die zwischen dem bei 50km/h bestehenden Teillastbetrieb der Brennstofferzeugung in dem Reformer 2 und dem tatsächlichen Brennstoffverbrauch der Brennstoffzelle 4 bei der Volllast über 10 Sekunden besteht.

Die größenmäßige und regelungstechnische Auslegung des Zwischenspeichers kann aber auch so durchgeführt werden, dass dieser ein Vielfaches dieser Differenz aufnehmen kann. Der Zwischenspeicher kann somit an die Anforderungen, die bei dem beabsichtigten Einsatz des Brennstoffzellensystems zu erwarten sind, angepasst werden. Vorzugsweise wird der Zwischenspeicher so ausgelegt, dass er die doppelte Menge dieser Differenz bevorraten kann, wodurch zwei solcher Beschleunigungsvorgänge ermöglicht werden oder der Beschleunigungsvorgang doppelt so lange ausgeführt werden kann, ohne dass der Zwischenspeicher 3 erneut aufgeladen werden muss. Der Differenzbetrag zwischen der brennstoffzellenseitigen Anforderung und der reformerseitigen Lieferung von Reformatgas wird somit doppelt so lange ausgeglichen. In dieser Zeit kann der Reformer von dem ursprünglichen Teillastbetrieb auf den für die höhere Geschwindigkeit notwendigen höheren Lastbetrieb, ggf. Höchstlastbetrieb, langsam hochgefahren werden und, sobald das im Zwischenspeicher gespeicherte Reformatgas aufgebraucht ist, die Versorgung der Brennstoffzelle mit Reformatgas durch Weiterleiten des Gases durch den Zwischenspeicher erfolgen.

Die dynamische Wirkungsweise des Systems kann aber auch für Vorgänge von Vorteil sein, bei denen die Geschwindigkeit des Fahrzeuges nur kurzfristig erhöht und anschließend wieder auf die Ausgangsgeschwindigkeit gesenkt wird. Dies ist beispielsweise bei Überholvorgängen der Fall. Durch das erfindungsgemäße Brennstoffzellensystem, bei dem ein kurzfristiger höherer Brennstoffgasbedarf an der Brennstoffzelle durch den Inhalt des Zwischenspeichers abgedeckt werden kann, ist es in solchen Situationen nicht notwendig den Betrieb des Reformers zu ändern, dieser kann trotz der kurzzeitigen erhöhten Leistungsabforderung an der Brennstoffzelle auf Normalbetrieb weitergefahren werden.

Auch bei der Verzögerung des Fahrzeuges kann sich die Verwendung des erfindungsgemäßen Systems als positiv erweisen. Geht ein Fahrzeug ausgehend von einem hohen Lastzustand in einen Teillastzustand oder den Leerlaufbetrieb über, wie etwa am Ende einer Autofahrt, und liegt die reformerseitige Brennstoffproduktion momentan weit über der brennstoffzellenseitigen Nachfrage, so kann die Überproduktion an Brennstoffgas in dem Zwischenspeicher aufgefangen werden. Das Brennstoffgas wird hierbei vorzugsweise so lange aufgefangen, bis der Brennstoffausstoß des Reformers dem Niedriglastzustand der Brennstoffzelle angepasst werden konnte. Ist die Verzögerung des Fahrzeuges nur von kurzer Dauer, d.h. wird es nach der Verzögerung erneut auf die Ausgangsgeschwindigkeit beschleunigt, so wird während der Verzögerungsphase der Reformatgasüberschuss in dem Zwischenspeicher aufgefangen und kann im Anschluss für den Beschleunigungsvorgang verwendet werden, so dass eine Änderung des Lastzustandes des Reformers nicht notwendig ist.

Aus diesen Beispielen ergibt sich, dass mit dem erfindungsgemäßen Brennstoffzellensystem eine ideale dynamische Betriebsweise möglich ist, die den momentanen Bedingungen spontan angepasst werden kann. Insbesondere kann mit dem erfindungsgemäßen System und dem erfindungsgemäßen Verfahren nicht nur einem kurzfristig erhöhten oder niedrigeren Bedarf an Brennstoffgas durch den Zwischenspeicher Rechnung getragen werden, vielmehr kann auch der Reformer-Betriebszustand sinnvoll gesteuert werden. Dieser muss bei kurzfristiger Änderung der Leistungsanforderungen an der Brennstoffzelle nicht geändert werden. Zudem kann die Befüllung des Zwischenspeichers bei der erfindungsgemäßen Vorrichtung und mit dem erfindungsgemäßen Verfahren während Verzögerungsvorgängen realisiert werden.

## Patentansprüche

1. Brennstoffzellensystem (1), das mindestens eine Reformereinheit (2), zur Erzeugung von wasserstoffhaltigem Reformatgas, und mindestens eine Brennstoffzelle (4) mit mindestens einem Eingang (41) für das wasserstoffhaltige Reformatgas umfasst, wobei zwischen der Ausgangsseite der Reformereinheit (2) und der wasserstoffseitigen Eingangsseite (41) der Brennstoffzelle (4) mindestens ein Zwischenspeicher (3) für das wasserstoffhaltige Reformatgas zwischengeschaltet ist.

2. Brennstoffzellensystem nach Anspruch 1 **dadurch gekennzeichnet, dass** die Zwischenschaltung des Zwischenspeichers (3) eine Reihenschaltung darstellt.

3. Brennstoffzellensystem nach Anspruch 1 oder 2 **dadurch gekennzeichnet, dass** der Zwischenspeicher (3) sich unmittelbar an die Reformereinheit (2) anschließt und keine weitere Bearbeitung des Reformatgases vor Eintritt in den Zwischenspeicher (3) erfolgt.

4. Brennstoffzellensystem nach einem der vorstehenden Ansprüche, **dadurch gekennzeichnet, dass** dieses mindestens ein Kontrollelement zur Überwachung des Befüllungszustandes des Zwischenspeichers (3) aufweist.

5. Brennstoffzellensystem nach einem der vorstehenden Ansprüche, **dadurch gekennzeichnet, dass** dieses mindestens ein Kontrollelement zur Überwachung des Betriebszustandes des Reformers (2) und mindestens ein Kontrollelement zur Überwachung der an der Brennstoffzelle (4) abgeforderten Leistung aufweist.

6. Brennstoffzellensystem nach einem der vorstehenden Ansprüche, **dadurch gekennzeichnet, dass** dieses mindestens ein Steuerelement für die Befüllung des Zwischenspeichers (3), für den Betriebszustand des Reformers (2) und/oder die Reformatgaszufuhr zu der Brennstoffzelle (4) aufweist.

7. Brennstoffzellensystem nach einem der vorstehenden Ansprüche, **dadurch gekennzeichnet, dass** der Zwischenspeicher (3) so ausgelegt ist, dass die aufnehmbare Reformatgasmenge im Verhältnis zu dem Gasbedarf steht, der von der Brennstoffzelle (4) zur Erbringung der maximalen Leistung erforderlich ist

8. Brennstoffzellensystem nach einem der vorstehenden Ansprüche **dadurch gekennzeichnet, dass** dieses zum Betreiben von Kraftfahrzeugen verwendet wird.

9. Steuerungsverfahren zum dynamischen Betreiben eines Brennstoffzellensystems, **dadurch gekennzeichnet, dass** die Zufuhr eines in einer Reformereinheit (2) erzeugten wasserstoffhaltigen Reformatgases zu einer Brennstoffzelle (4) über einen Zwischenspeicher (3) erfolgt.

10. Verfahren nach Anspruch 9 **dadurch gekennzeichnet, dass** die Leistungsabforderung an der Brennstoffzelle (4) und der Befüllungszustand des Zwischenspeichers (3) überwacht werden und der Betriebszustand des Reformers (2) abhängig von den Überwachungsergebnissen gesteuert wird.
